# EUROPEAN PATENT APPLICATION

(11) **EP 4 700 704 A1**
(43) Date of publication of application: **25.02.2026**
(21) Application number: 25197148.7
(22) Date of filing: 20.08.2025
(51) Int. Cl.: G06T 7/593

(54) **A DEVICE, COMPUTER PROGRAM AND METHOD**

(30) Priority: 22.08.2024 GB 202412393
(71) Applicant: Sony Group Corporation, Tokyo 108-0075 (JP); Sony Europe B.V., Weybridge, Surrey KT13 0XW (GB)
(72) Inventor: SHARAM, James Alexander, Basingstoke RG22 4SB (GB); DELABARRE, Bertrand Vincent Joseph, Basingstoke RG22 4SB (GB); GALTON, Matt Sean, Basingstoke RG22 4SB (GB); VAREZHKIN, Serhii, Basingstoke RG22 4SB (GB)
(74) Representative: D Young & Co LLP

(57) **Abstract**

A method of detecting the real-world position of an object in a real-world scene, comprising: obtaining, from a plurality of cameras each having a different field of view of the object, a plurality of images of the object in the real-world scene over a first time window, each of the plurality of images being provided by a different one of the cameras; determining the position of the object in each image captured by each of the plurality of cameras over the first time window; building a 3D model of the continuous real-world position of the object in the real-world scene over the first time window based upon the determined position in each image captured by the plurality of cameras; and establishing, from the 3D model, the 3D position of the object at a particular time in the real-world scene.

## Description

### BACKGROUND

### Field of the Disclosure

The present technique relates to a device, computer program and method.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present technique.

Over recent years, detecting the position of objects such as people in a real-life scene has become increasingly important. For example, in sport, it is now possible to detect the position of objects on a field of play from images captured by calibrated cameras located around the field of play. This information is provided to match officials to assist in making decisions and to sports teams to help them train and obtain vital information about individuals playing the game. For example, the position of a part of a soccer player helps the match officials determine whether a player is off-side or not very quickly and accurately. Moreover, in ice-hockey, the position of the hockey stick can be detected and is used by match officials to determine if a high-sticking infraction has occurred. These decisions can be made in near real-time or after the event and can prompt a review of a particular decision.

The current systems for determining the position of objects from images requires the cameras to be synchronised. In other words, the frame capture of each camera has to be synchronised. This limits the variety of cameras that can be used to capture the images and requires quite complex network architecture.

Moreover, in the current systems, a minimum of two cameras must see the object whose position is being determined to contribute to the detection and tracking of that object at any point in time. This is sometimes difficult to achieve, especially in a sports event due to occlusion.

It is an aim of the disclosure to address at least one of these two issues.

### SUMMARY

According to embodiments of the disclosure, there is provided a method of detecting the real-world position of an object in a real-world scene, comprising: obtaining, from a plurality of cameras each having a different field of view of the object, a plurality of images of the object in the real-world scene over a first time window, each of the plurality of images being provided by a different one of the cameras; determining the position of the object in each image captured by each of the plurality of cameras over the first time window; building a 3D model of the continuous real-world position of the object in the real-world scene over the first time window based upon the determined position in each image captured by the plurality of cameras; and establishing, from the 3D model, the 3D position of the object at a particular time in the real-world scene.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 shows a player 130 on a sports field 120 in a sporting venue 105;
Figures 2A and 2B show different views of the object 140 captured by two different cameras;
Figure 3 shows the object 140 in a second position;
Figures 4A and 4B show the object 140' in the second position;
Figure 5 shows a device 100 according to embodiments of the disclosure;
Figure 6 shows a flow chart 600 explaining the process carried out within the device 100 according to embodiments;
Figure 7, explains embodiments of the disclosure relating to the generation of a new 3D position model in step 625 of Figure 6;
Figures 8A-C show a three dimensional model of the position of the object being populated over time; and
Figure 9 shows a process 900 describing a method of detecting the real-world position of an object in a real-world scene according to embodiments.

### DESCRIPTION OF THE EMBODIMENTS

Referring now to the drawings, wherein like reference numerals designate identical or corresponding parts throughout the several views.

Numerous modifications and variations of the present disclosure are possible in light of the above teachings. It is therefore to be understood that within the scope of the appended claims, the disclosure may be practiced otherwise than as specifically described herein.

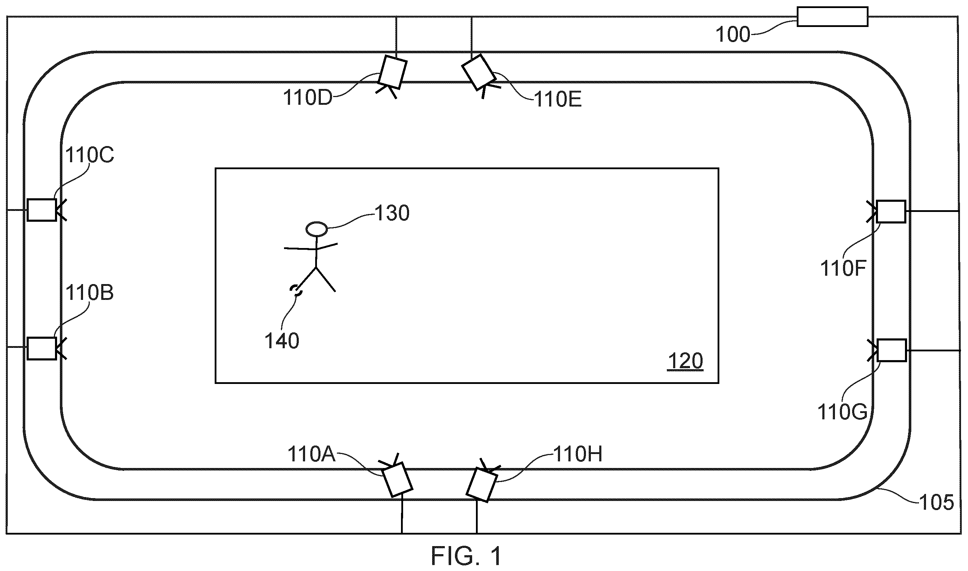

Figure 1 shows a player 130 on a sports field 120 in a sporting venue 105. In Figure 1, an object 140 is shown in a first position. In the sporting venue 105 there are provided a plurality of cameras 110A-H connected to a device 100 according to embodiments. In embodiments of the disclosure, each of the cameras 110A-H have a different field of view of the sports field 120 and although eight cameras are shown in this example, any number of two or more cameras, each having a different field of view of the object 140 on the sports field 120 is envisaged. Although any number of the cameras may be time synchronised, in embodiments, one or more of the cameras may not be time synchronised. The cameras 110A-H may be wirelessly or have a wired connected to the device 100. In fact, in embodiments, the device 100 may be located remote to the sporting venue 105 and so connected to one or more of the cameras 110A-H over a network such as the Internet or a Private network, virtual private network or the like.

The device 100 is provided with the focal length of each camera 110A-H, the heading of each camera (such as the rotation of the camera) and, in embodiments, any zoom associated with each camera. This camera information is used, in embodiments, to determine the real-life position of the object in the scene as is understood by the skilled person.

Moreover, although embodiments of the disclosure show the object 140 as the player or part of a player 130 on a sports field in a sporting venue 105, the disclosure is not so limited. In particular, in embodiments of the disclosure, the object 140 (which is shown to be a foot of the player 130 in Figure 1) may be any object in a real-world scene. For example, the object 140 may be one or more of: at least part of a sporting projectile such as a soccer ball or hockey puck, or may be at least part of an implement used by a player 130 such as a hockey or lacrosse stick, or may be a player bounding box, player keypoints such as joints or key locations on the body, projectile/ball bounding boxes, projectile/ball keypoints, racket/stick/bat bounding boxes, racket/stick/bat key points, team identification information, player identification information or the like. Moreover, the disclosure is not so limited to sporting venue 105 or a sports field 120 and any real-world scene is envisaged which is not sport related. In which case, the object 140 whose real-world position is being detected in a scene may be any object in any real-world scene.

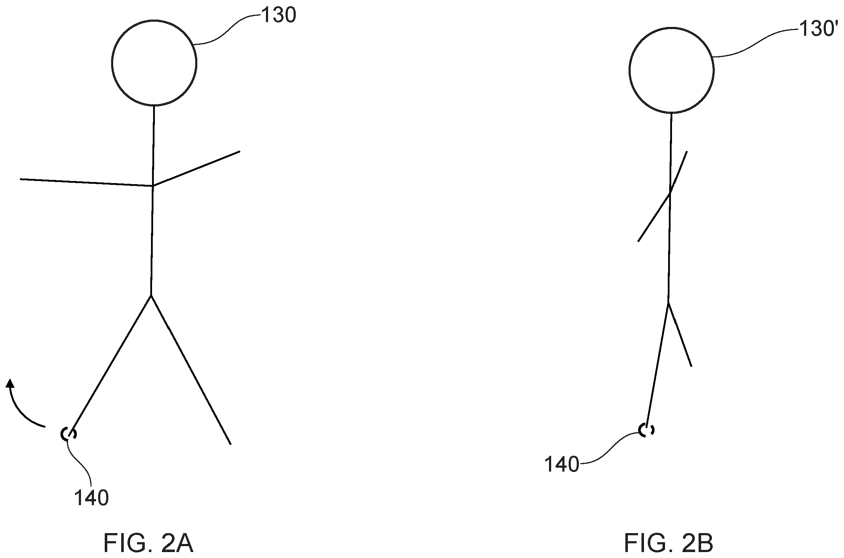

Figures 2A and 2B show different views of the object 140 captured by two different cameras. Specifically, Figure 2A shows the field of view of the object 140 captured by a first camera 110A and Figure 2B shows the field of view of the object 140 captured by a second camera 110B. As is evident from Figure 2A, the object 140 is moving in an upward direction.

It should be noted here that the object 140, in embodiments, is a foot of player 130. As will be explained later, the movement of the foot is constrained by the physiology of the player 130. In other words, the foot can rotate about the ankle, but its angle of rotation is constrained by physiology of the player 130 and its translational movement is constrained by the movement of the player's knee and hips. This set of constraints is used to determine the likely position of the object 140, and constrain the allowed positions of the object, in the next frame where its position is tracked. As would be appreciated this constraint can be applied to any object. For example, if the object to be tracked is a knee, the knee itself only has two degrees of freedom as the knee is a hinge joint. However, the hip joint is a ball and socket joint and so has many degrees of freedom and so these two constraints are, in embodiments, used to determine a limit to the position of the knee in the next frame.

As will be discussed later, the set of constraints is used to determine whether the predicted position of the object in the 3D space is feasible. In other words, if the predicted position of the object in the 3D space is not feasible due to the predicted position requiring the knee to bend in the wrong direction (i.e. a physiologically improbable direction), then the probability that the predicted position is correct is very low. Therefore, a high error value is attributed to the predicted position which dissuades the device 100 from predicting the position of the object in the physiologically improbable position. The constraints are therefore used to optimise the position of the object in the 3D space and this optimisation is performed quickly and accurately.

In order to establish constraints, known 3D modelling software is used. In this software, each joint is identified and the movement of the joints (such as the degrees of freedom) is defined. Of course, the disclosure is not so limited. In particular, it is envisaged that one or more constraint is applied to one or more skeletal feature within the 3D model. This may be added to the known 3D modelling software. Further, it is possible to infer one or more constraint using learned human motions from a machine learning model.

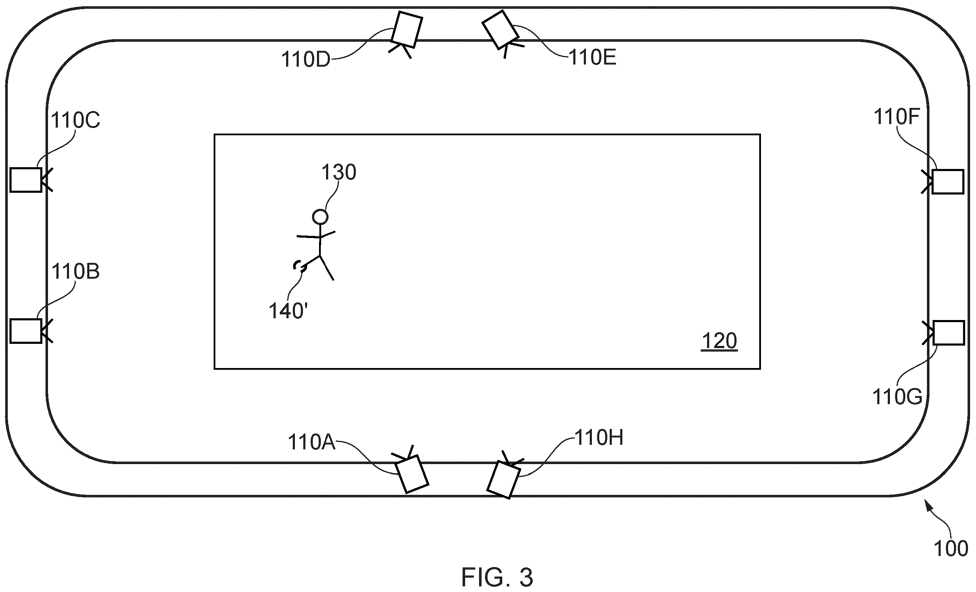

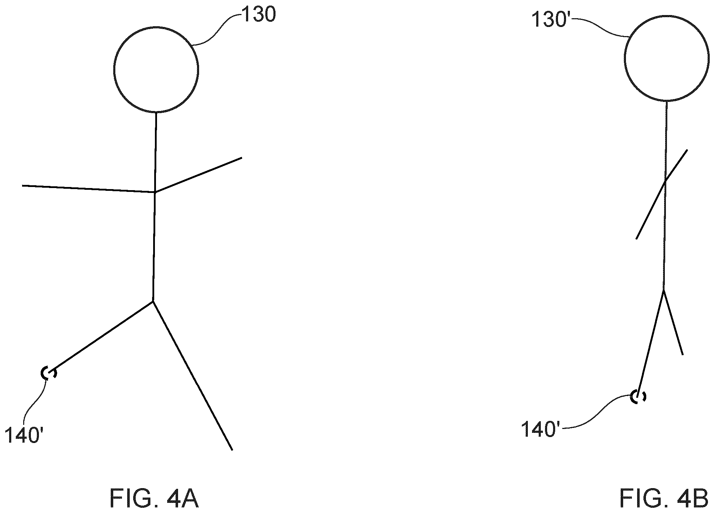

Figure 3 is the same as Figure 1 except, in Figure 3, the object 140 is shown in a second position. Similarly, Figures 4A and 4B are the same as Figures 2A and 2B respectively except, in Figures 4A and 4B the object 140' is shown in the second position.

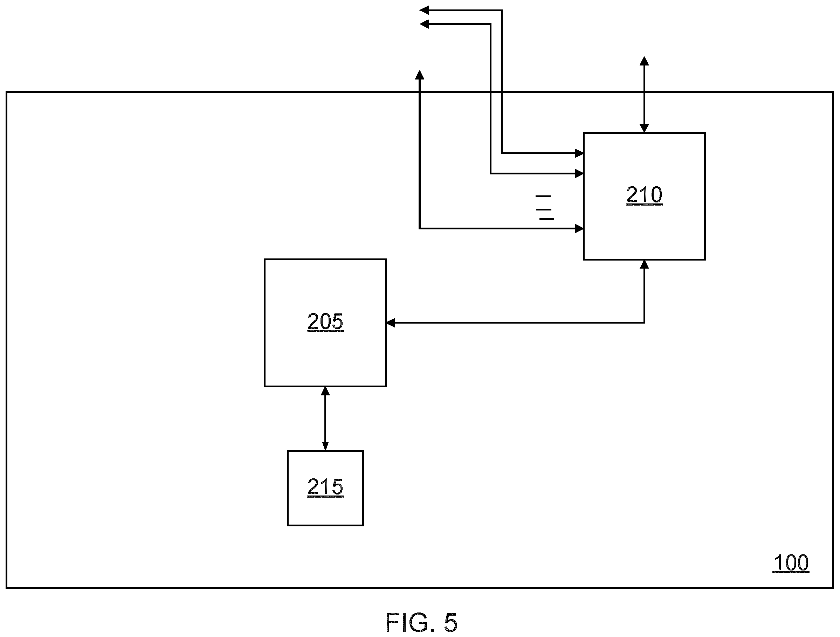

Figure 5 shows a device 100 according to embodiments of the disclosure. The device 100 includes processing circuitry 205. The processing circuitry 205 is, in embodiments, semiconductor circuitry that may be an Application Specific Integrated Circuit. However, in embodiments, the processing circuitry 205 is controlled by computer software to perform embodiments of the disclosure. In embodiments, the computer software is stored in storage 215 that may be solid state or magnetically or optically readable storage and is connected to the processing circuitry 205. In addition to the computer software, the processing circuitry 205 will, in embodiments, include other data such as the camera information allowing the real-world position of the object to be calculated and a 3D positional model for each object captured by each of the cameras 110A-H as will be explained later.

Additionally provided in the device 100 is communication circuitry 210. The communication circuitry 210 is configured to receive the images from one or more of the cameras 110A-H. In addition, the communication circuitry 210 is configured to receive data from a user interface. This data may control a Graphical User Interface (not shown) to be used by a user. For example, the user may request a particular time period or point in time for which the 3D position of the object is required. In addition, the communication circuitry 210 may output the 3D position of the object periodically over a network such as the Internet as will be noted later.

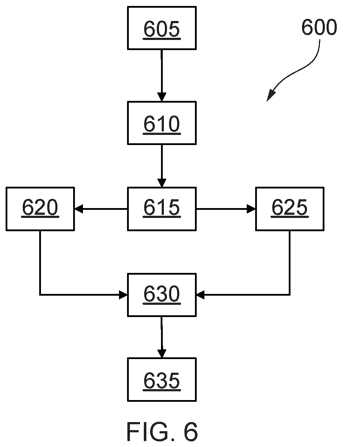

Figure 6 shows a flow chart 600 explaining the process carried out within the device 100 according to embodiments. The process starts in step 605 and then moves to step 610. In step 610, the images captured by the cameras 110A-110H are provided to the device 100 via the communication circuitry 210. The process then moves to step 615 where object detection is carried out on the received images. The object detection is used to extract key features of the image as objects such as bounding boxes, keypoints and the like as noted above. Of course, although object detection is used followed by key feature detection, the disclosure is not so limited. In embodiments, it is envisaged that key feature detection is performed directly on the image. In other words, rather than an object detection step being carried out followed by keypoint detection, the disclosure is not so limited and keypoint detection may be carried out on the image. In the event that an object is detected in a received image, a check is carried out to determine if the detected object has an existing 3D position model associated with it.

In order to achieve this, in embodiments, each detected object captured in a series of images over a time window (which is explained later) are collated.

These detected objects are then either associated with an existing 3D position model and if there is no corresponding 3D position model available, a new 3D position model is started for that object.

In embodiments, in order to associate a detected object with an existing 3D position model, a prediction of the motion of each 3D position model is made over a next (subsequent) time window. This results in a set of predicted 3D motions (one 3D motion per 3D position model). The set of predicted 3D motions is projected into the 2D space and each predicted 2D motions is compared with the detected 2D position of the keypoint If the detected 2D position of the keypoint is within a threshold distance of one of the predicted 2D motions, the detected 2D position is associated with the corresponding 3D position model (step 620).

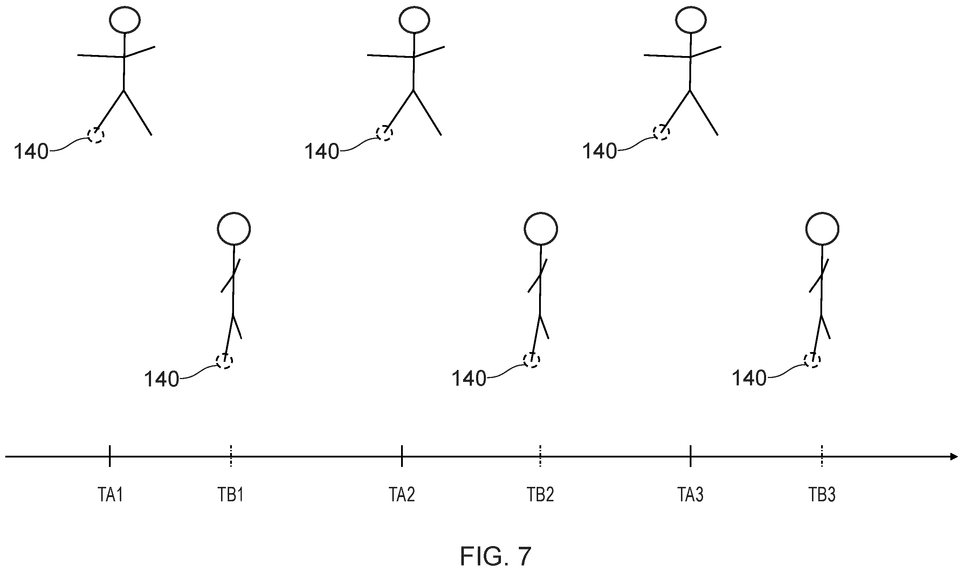

In embodiments, in order to associate a detected object with an existing 3D position model, characteristics of the detected object such as its colour, shape or other physical dimensions is used to determine if the detected object has an existing 3D position model associated with it. This embodiment is explained in Figure 7.

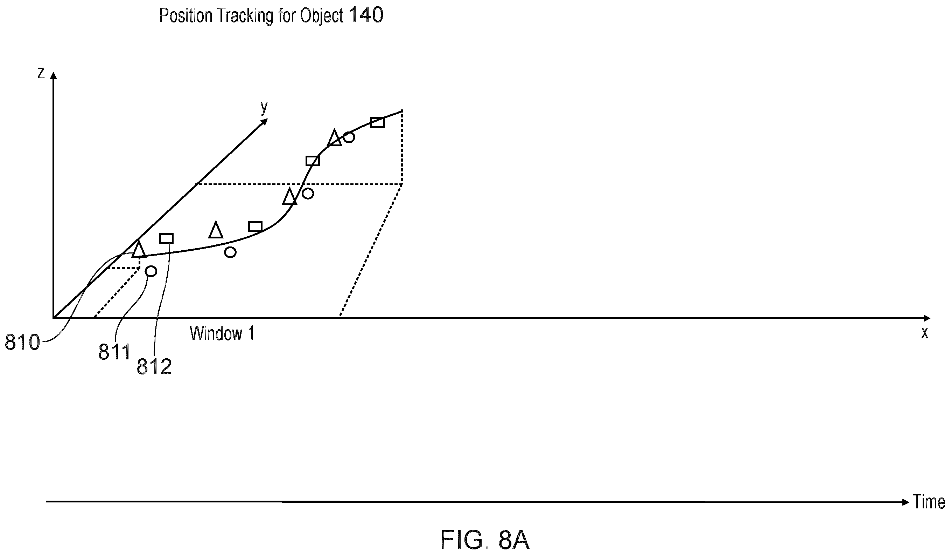

The 3D position models are stored in storage 215. The addition of the detected object to the 3D position model will be explained with reference to Figures 8A-C.

However, if the detected object was not previously detected and so is not associated with an existing 3D position model, the process moves to step 625 where a new 3D position model for that object will be generated. This is explained with reference to Figure 7.

The process from both step 620 and step 625 moves to step 630. In step 630, the 3D position models stored within storage 215 are analysed. In step 630, a check is carried out and in the event of a 3D position model has not been updated for a period of time because the object has not been detected, the 3D position model is deleted. In embodiments, the period of time may be any time such as 20 minutes or may be set depending upon a sporting event such as a half or quarter of the match or the like. This reduces the space used within storage 215.

The process moves to step 635 where the 3D position data is retrieved for an object that is being tracked. As each 3D position model provides the real-life position of each object being tracked, a particular time is provided to the device 100 and the processing circuitry 205 retrieves the real-life, 3D position, of the object at that time from the storage 215. The time may be a single point in time or may be a time period or may be a regular time period. For example, the position of the object at regular (periodic) time intervals may be provided to a destination such as a message queue. The regular time intervals may be set depending upon the frame rate of video being viewed and different intervals may be provided to different consumers of the position information.

In addition, and in embodiments, the 3D position model for a particular object between two points in time may be retrieved. This may be used by sports teams to determine the movement of a player over the course of a match, or the speed of a player during a certain part of the match. This means that specific player tracking devices would not need to be worn by players during the match.

Moreover, in embodiments, the position of an object at any point in time can be determined to assist match officials. For example, it is possible to establish when an offside offence has taken place in soccer by establishing the point in time when a soccer ball is kicked (using, for example, an accelerometer in the ball) and determine the position of the attacking player and the defending players at that time using the 3D position model. As will be appreciated, the disclosure is not so limited and match officials in any sport may be assisted.

Referring to Figure 7, embodiments of the disclosure relating to the generation of a new 3D position model in step 625 of Figure 6 is explained. In other words, Figure 7 explains the process for starting a new 3D position model to be associated with an object and determining the initial real-life position of the object in the 3D position model.

As can be seen from Figure 7, various images from the first camera 110A and the second camera 110B are shown. As noted above, the field of view from the first camera 110A and the field of view from the second camera 110B is different. Further, as the first camera 110A and the second camera 110B are not synchronised in embodiments, the images are captured at different times by the first camera 110A and the second camera 110B.

A first image is captured by the first camera 110A at time TA1. Object detection is performed on this image and the object 140 is detected. In embodiments, characteristics of the object 140 are used to compare to other stored objects being tracked. For example, colour characteristics or positional information of the object 140 is used to determine if object 140 is currently being tracked. The position of the object 140 in a 2D image space is determined from the x,y position (i.e. pixel position) of the object in the image. Camera parameters from the first camera 110A, such as focal length lens distortion parameters and the like, are used to convert the 2D image space position in a ray in 3D space. In other words, the camera parameters are used to convert the 2D image space position into an infinite line originating from a point in 3D space as would be appreciated by the skilled person. The position of the object in 2D image space is stored in association with the characteristics of the object 140 and a unique identifier of the object 140. The identifier need only be unique within the images being captured (i.e. for the images of the sporting event being played according to embodiments) and so a counter or random number generator may be used to produce the unique identifier.

A second image is captured by the second camera 110B at time TB1. Again, object detection is performed on this image and object 140 is detected. As is the case with the first image, characteristics of the object 140 are used to compare to other objects being tracked. At this point, it is determined that object 140 was in image TA1. As the object 140 is detected in a second image, this indicates that the object 140 is not a false object in the image caused by a reflection or the like. The position of the object 140 in 2D image space established from the second camera 110B is stored in association with the characteristics of the object and the identifier of the object 140. It will be appreciated that more than two images may be required to determine if the captured object was a false object, but two images are used in this embodiment for brevity.

Further images are captured by the first camera 110A at times TA2 and TA3 and by the second camera 110B at times TB2 and TB3 and the process explained with respect to time TA1 and TB1 is carried out.

Accordingly, there are positions of the object 140 in 2D image space determined from two different field of views at different times. In order to find the position of the object 140 in 3D space (i.e. the position of the object in the real world), the position of the object 140 in 3D space from the first camera 110A at time TB1 is interpolated from the position of the object 140 in 2D image space at time TA1 and time TA2. In other words, as the position of the object 140 in 2D image space is known at time TA1 and at TA2, it is possible to interpolate the position of the object 140 in 2D image space from the first camera 110A at time TB1.

The interpolated position of the object 140 in 2D image space from the first camera 110A field of view is triangulated with the position of the object 140 in 2D image space from the second camera 110B field of view at time TB1. The real-world position of the object 140 at time TB1 is therefore established and this position is, in embodiments, provided to the 3D position model as an initial position for the 3D position model as will be explained with reference to Figure 8A-C.

It should be noted that although embodiments of Figure 7 describe interpolating the position of the object 140 in 2D image space, this is relevant only if the first and second camera are not time synchronised. In the event that the first and second camera are time synchronised, there will be no need to interpolate the position of the object in 2D image space.

Embodiments of the disclosure will be explained with reference to Figures 8A-C which shows a three dimensional model of the position of the object being populated over time. As will be explained, the three dimensional model of the position of the object in the real-world scene over time is created from the position of the object in the images captured by one or more of the cameras. By creating a continuous model of the real-life positon of the object over time, the real-life position of the object in the real-life scene at any time can be established.

Figure 8A shows the 3D position model of the position of the object 140 over time. It should be noted that different 3D position models will be established for each individual object being tracked in the image. The 3D position model of object 140 is shown as the solid line position on an x,y,z co-ordinate space. In other words, the 3D model shows a continuous real-world position of the object 140 over time. Accordingly, the real-world position of the object 140 at any time is established by looking at the position in 3D space provided by the 3D model at a particular time.

In order to generate the 3D model of the position of the object 140, the position of the object 140 in 2D image space is established from each captured image over a time window At the end of time window 1, four positions of the object 140 in 2D image space have been established for each of the first, second and third camera 110A-C.

The position of the object 140 in 2D image space is established for each captured image over a time window. In the particular embodiment of Figure 8A, the position of the object 140 captured by the first camera 110A is shown as a triangle 810, the position of the object 140 captured by the second camera 110B is shown as a circle 811 and the position of the object 140 captured by a third camera 110C is shown as a rectangle 812. As will be appreciated, the first, second and third cameras are not synchronised in time and so the output from the respective cameras is provided at different times. It is noted, however, that each of the three cameras provides a timestamp indicating the time at which the image was captured.

An initial z position for the 3D model is required. This is, in embodiments, established when a track is determined as was explained with reference to Figure 7. However, in embodiments, the real-life z position may be determined by any means. For example, this may be determined using a characteristic of the object being tracked. So, if the object being tracked is a foot, it is envisaged that the z position of the foot may be within a certain distance of the surface of the pitch (i.e. less than 3m in the z direction from the surface of the pitch).

Accordingly, the position of the object 140 in 2D image space is determined from the image captured by the first camera 110A and the z position is, in embodiments, determined using the technique described in Figure 7, although the disclosure is not so limited and any value of z may be used. This initial position in 2D image space is shown by triangle 810. Moreover, a timestamp indicating when the image was captured by the first camera 110A is provided to the device 100 with the image as metadata.

An image of the object 140 is captured by the second camera some time later within the first time window. This is shown by circle 811. The position of the object 140 in 2D image space is determined. As the position of the object 140 in 2D image space is known from the first camera 110B a known time earlier, it is possible to refine the z position of the object 140 in the 3D model at the time the image is captured by the second camera 110C. In particular, given the position of the object 140 in 2D image space is known from the image captured by the first camera 110A, and the time elapsed between the capture of the image from the first camera 110A and the image from the second camera 110B, an approximate 3D (real-world) position of the object 140 is determined from the image captured by the first camera 110B and the image captured by the second camera 110C using triangulation. This is possible because the field of view of each camera is different.

Similarly, an image of the object 140 is captured by the third camera some time later within the first time window. The position of the object 140 in 2D image space is determined. As the position of the object 140 in 2D image space is known from the first camera 110A and the second camera 110B a known time earlier, it is possible to refine the z position of the object 140 in the 3D model at the time the image is captured by the third camera 110C.

This process continues and a line is fitted between the positions determined by each of the cameras during the time window. There are many known line fitting techniques that may be used, but in embodiments, a Broyden-Fletcher-Goldfarb-Shanno algorithm (BFGS) is used. The 3D model of the real world position of the object is the fitted line.

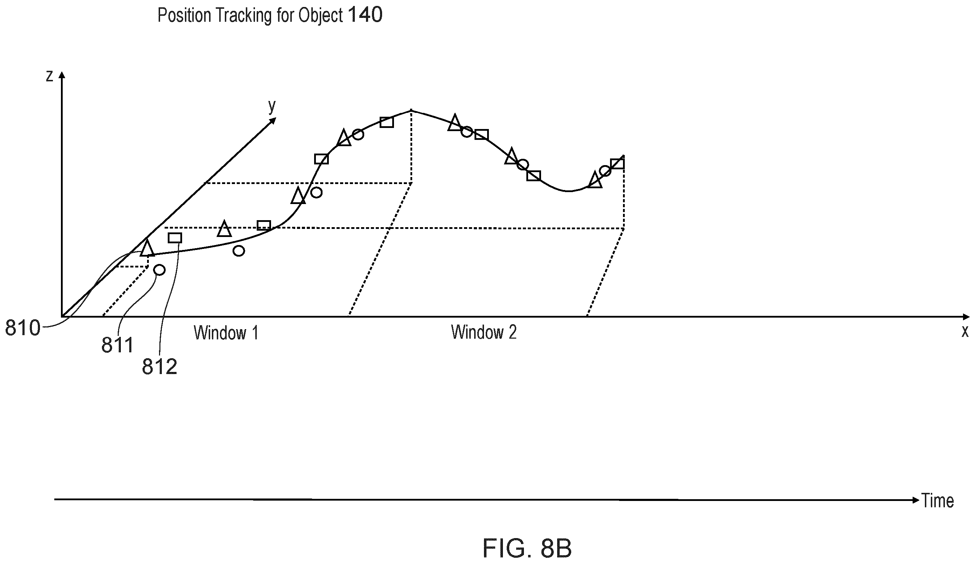

Referring to Figure 8B, a 3D model of the position of the object 140 during a second time window is shown. In this case, the starting position of the 3D model for the second window is the object position of the 3D model at the end of the first time window. This allows a time-continuous 3D model of the real-world position of the object 140 to be produced. The 3D model of the object position is determined in a similar manner to that described in respect of the first time window. For brevity, this will not be described again.

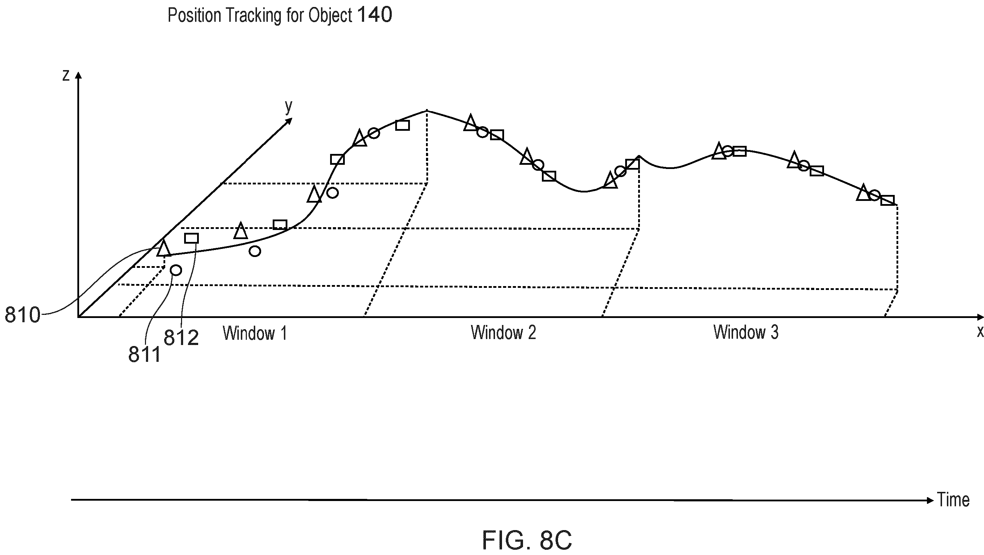

Referring to Figure 8C, a 3D model of the position of the object 140 during a third time window is shown. In this case, the starting position of the 3D model for the third time window is the object position of the 3D model at the end of the second time window. The 3D model of the object position is determined in a similar manner to that described in respect of the first and second time window. For brevity, this will not be described again.

It should be noted that with the process described with reference to Figures 8A-8C, as the images captured by the cameras are not synchronised, if the object is occluded and so only one camera captures an image of the object, the position of the object in 2D image space is also used to refine the 3D model of the position of the object 140.

It will be noted that Figures 8A to 8C show three time windows that do not overlap. This is done for ease of explanation. However, in embodiments, the time windows would overlap. By having overlapping time windows, discontinuities in the 3D model are avoided as one time window moves to another time window. Moreover, derivatives of the position of the object in the 3D model, such as velocity and acceleration, are maintained. In embodiments, 50% of the time window overlaps with the previous time window to ensure continuity of the 3D model. In embodiments, the overlapping time windows are blended together with a blending function within the overlap region.

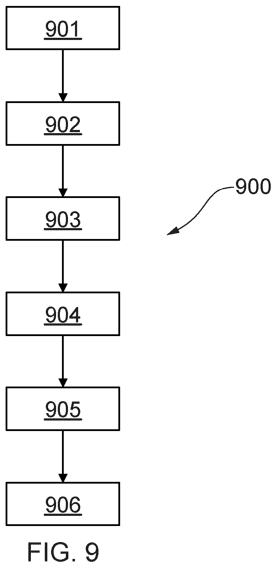

Figure 9 shows a process 900 describing a method of detecting the real-world position of an object in a real-world scene according to embodiments. The process 900 starts at step 901 and moves to step 902. In step 902, the process obtains, from a plurality of cameras each having a different field of view of the object, a plurality of images of the object in the real-world scene over a time period (in embodiments, a time window), each of the plurality of images being provided by a different one of the cameras. In other words, each of the plurality of cameras may capture one or more images over the time period. The process moves to step 903 where the process determines the position of the object in each image captured by each of the plurality of cameras over the time period.

The process 900 moves to step 904 where a 3D model of the continuous real-world position of the object in the real-world scene over the time period based upon the determined position in each image captured by the plurality of cameras is built.

The process moves to step 905 that establishes the position of the object at a particular time in the real-world scene from the 3D model. The process ends at step 906.

Although the foregoing describes establishing the real-world x,y position of the object and storing that in association with the image, the disclosure is not so limited. In particular, the pixel position of the object in the image may be determined and stored in association with the image. The pixel position of the object may then be used to determine the 3D model (using the camera information

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

Embodiments of the present technique can generally described by the following numbered clauses:
1. A method of detecting the real-world position of an object in a real-world scene, comprising:
   obtaining, from a plurality of cameras each having a different field of view of the object, a plurality of images of the object in the real-world scene over a first time window, each of the plurality of images being provided by a different one of the cameras;
   determining the position of the object in each image captured by each of the plurality of cameras over the first time window;
   building a 3D model of the continuous real-world position of the object in the real-world scene over the first time window based upon the determined position in each image captured by the plurality of cameras; and
   establishing, from the 3D model, the 3D position of the object at a particular time in the real-world scene.
2. A method according to clause 1, further comprising:
   building a 3D model of the continuous real-world position of the object in the real-world scene over a second time window based upon the determined position in each image captured by the plurality of cameras, wherein the final real-world position of the object in the 3D model of the first time window is the initial real-world position of the object in the 3D model of the second time window.
3. A method according to either clause 1 or 2, further comprising:
   deleting the 3D model when the object is not detected for a period of time.
4. A method according to any preceding clause, further comprising:
   establishing the 3D position of the object over a periodic time interval.
5. A method according to clause 4, wherein the periodic time interval is set based upon a frame rate of video being viewed.
6. A method according to any preceding clause, further comprising:
   checking the detected object in a first of the plurality of images against a list of previously detected objects and, in the event that the object is not in the list of previously detected objects, the method further comprises:
   identifying the detected object in a second of the plurality of images, the second image having a different field of view of the detected object to the first image;
   determining the position of the object detected in the second image at a synchronised time to the first image;
   determining, using the time synchronised first and second image, the real-world position of the object; and
   providing the determined real-world position as an initial real-world position of the object in the 3D model.
7. A method according to any preceding clause, further comprising:
   determining the position of the object in 2D image space using the pixel position of the object in one of the images captured by a respective one of the plurality of cameras and camera information associated with the respective camera, wherein the camera information includes the focal length of the camera and camera heading information.
8. A method according to any preceding clause, wherein the object is one or more of at least part of a sporting projectile, at least part of an implement used by a player, a player bounding box, player keypoints, key locations on the body, projectile/ball bounding boxes, projectile/ball keypoints, racket/stick/bat bounding boxes, racket/stick/bat key points, team identification information or player identification information.
9. A device for detecting the real-world position of an object in a real-world scene, comprising circuitry configured to:
   obtain, from a plurality of cameras each having a different field of view of the object, a plurality of images of the object in the real-world scene over a first time window, each of the plurality of images being provided by a different one of the cameras;
   determine the position of the object in each image captured by each of the plurality of cameras over the first time window;
   build a 3D model of the continuous real-world position of the object in the real-world scene over the first time window based upon the determined position in each image captured by the plurality of cameras; and
   establish, from the 3D model, the 3D position of the object at a particular time in the real-world scene.
10. A device according to clause 9, wherein the circuitry is configured to:
   build a 3D model of the continuous real-world position of the object in the real-world scene over a second time window based upon the determined position in each image captured by the plurality of cameras, wherein the final real-world position of the object in the 3D model of the first time window is the initial real-world position of the object in the 3D model of the second time window.
11. A device according to either clause 9 or 10, wherein the circuitry is further configured to:
   delete the 3D model when the object is not detected for a period of time.
12. A device according to any one of clauses 9, 10 or 11, wherein the circuitry is further configured to:
   establish the 3D position of the object over a periodic time interval.
13. A device according to clause 12, wherein the periodic time interval is set based upon a frame rate of video being viewed.
14. A device according to any one of clause 9 to 13, wherein the circuitry is further configured to:
   check the detected object in a first of the plurality of images against a list of previously detected objects and, in the event that the object is not in the list of previously detected objects, the method further comprises:
   identify the detected object in a second of the plurality of images, the second image having a different field of view of the detected object to the first image;
   determine the position of the object detected in the second image at a synchronised time to the first image;
   determine, using the time synchronised first and second image, the real-world position of the object; and
   provide the determined real-world position as an initial real-world position of the object in the 3D model.
15. A device according to any one of clauses 9 to 14, wherein the circuitry is further configured to:
   determine the position of the object in 2D image space using the pixel position of the object in one of the images captured by a respective one of the plurality of cameras and camera information associated with the respective camera, wherein the camera information includes the focal length of the camera and camera heading information.
16. A device according to any one of clauses 9 to 15, wherein the object is one or more of at least part of a sporting projectile, at least part of an implement used by a player, a player bounding box, player keypoints, key locations on the body, projectile/ball bounding boxes, projectile/ball keypoints, racket/stick/bat bounding boxes, racket/stick/bat key points, team identification information or player identification information.
17. A computer program comprising computer readable instructions which, when loaded onto a computer, configures the computer to perform a method according to any one of clauses 1 to 8.

## Claims

1. A method of detecting the real-world position of an object in a real-world scene, comprising:
obtaining, from a plurality of cameras each having a different field of view of the object, a plurality of images of the object in the real-world scene over a first time window, each of the plurality of images being provided by a different one of the cameras;
determining the position of the object in each image captured by each of the plurality of cameras over the first time window;
building a 3D model of the continuous real-world position of the object in the real-world scene over the first time window based upon the determined position in each image captured by the plurality of cameras; and
establishing, from the 3D model, the 3D position of the object at a particular time in the real-world scene.

2. A method according to claim 1, further comprising:
building a 3D model of the continuous real-world position of the object in the real-world scene over a second time window based upon the determined position in each image captured by the plurality of cameras, wherein the final real-world position of the object in the 3D model of the first time window is the initial real-world position of the object in the 3D model of the second time window.

3. A method according to claim 1 or 2, further comprising:
deleting the 3D model when the object is not detected for a period of time.

4. A method according to any preceding claim, further comprising:
establishing the 3D position of the object over a periodic time interval.

5. A method according to claim 4, wherein the periodic time interval is set based upon a frame rate of video being viewed.

6. A method according to any preceding claim, further comprising:
checking the detected object in a first of the plurality of images against a list of previously detected objects and, in the event that the object is not in the list of previously detected objects, the method further comprises:
identifying the detected object in a second of the plurality of images, the second image having a different field of view of the detected object to the first image;
determining the position of the object detected in the second image at a synchronised time to the first image;
determining, using the time synchronised first and second image, the real-world position of the object; and
providing the determined real-world position as an initial real-world position of the object in the 3D model.

7. A method according to any preceding claim, further comprising:
determining the position of the object in 2D image space using the pixel position of the object in one of the images captured by a respective one of the plurality of cameras and camera information associated with the respective camera, wherein the camera information includes the focal length of the camera and camera heading information.

8. A device for detecting the real-world position of an object in a real-world scene, comprising circuitry configured to:
obtain, from a plurality of cameras each having a different field of view of the object, a plurality of images of the object in the real-world scene over a first time window, each of the plurality of images being provided by a different one of the cameras;
determine the position of the object in each image captured by each of the plurality of cameras over the first time window;
build a 3D model of the continuous real-world position of the object in the real-world scene over the first time window based upon the determined position in each image captured by the plurality of cameras; and
establish, from the 3D model, the 3D position of the object at a particular time in the real-world scene.

9. A device according to claim 8, wherein the circuitry is configured to:
build a 3D model of the continuous real-world position of the object in the real-world scene over a second time window based upon the determined position in each image captured by the plurality of cameras, wherein the final real-world position of the object in the 3D model of the first time window is the initial real-world position of the object in the 3D model of the second time window.

10. A device according to claim 8 or 9, wherein the circuitry is further configured to:
delete the 3D model when the object is not detected for a period of time.

11. A device according to any one of claim 8, 9 or 10, wherein the circuitry is further configured to:
establish the 3D position of the object over a periodic time interval.

12. A device according to claim 11, wherein the periodic time interval is set based upon a frame rate of video being viewed.

13. A device according to claim 8 to 12, wherein the circuitry is further configured to:
check the detected object in a first of the plurality of images against a list of previously detected objects and, in the event that the object is not in the list of previously detected objects, the method further comprises:
identify the detected object in a second of the plurality of images, the second image having a different field of view of the detected object to the first image;
determine the position of the object detected in the second image at a synchronised time to the first image;
determine, using the time synchronised first and second image, the real-world position of the object; and
provide the determined real-world position as an initial real-world position of the object in the 3D model.

14. A device according to any one of claim 8 to 13, wherein the circuitry is further configured to:
determine the position of the object in 2D image space using the pixel position of the object in one of the images captured by a respective one of the plurality of cameras and camera information associated with the respective camera, wherein the camera information includes the focal length of the camera and camera heading information.

15. A computer program comprising computer readable instructions which, when loaded onto a computer, configures the computer to perform a method according to any one of claim 1 to 8.
